# EUROPEAN PATENT SPECIFICATION

(11) **EP 3 711 845 B1**
(45) Date of publication and mention of the grant of the patent: **03.04.2024**
(21) Application number: 18878556.2
(22) Date of filing: 29.10.2018
(51) Int. Cl.: B01D 53/22, B01D 19/00, B01D 67/00, B01D 69/00, B01D 69/12, B01D 71/26, B01D 71/28, B01D 71/32, B01D 71/48, B01D 71/52, B01D 71/64, B01D 71/66, B01D 71/68, C08L 101/12, B01D 71/36, B01D 71/40

(54) **METHOD AND APPARATUS FOR PRODUCING ACIDIC GAS SEPARATION MEMBRANE SHEET**
VERFAHREN UND VORRICHTUNG ZUR HERSTELLUNG EINER SAUERGASTRENNMEMBRANFOLIE
PROCÉDÉ ET APPAREIL POUR PRODUIRE UNE FEUILLE DE MEMBRANE DE SÉPARATION DE GAZ ACIDE

(30) Priority: 15.11.2017 JP 2017220270
(43) Date of publication of application: 23.09.2020
(73) Proprietor: SUMITOMO CHEMICAL COMPANY, LIMITED, Chuo-ku, Tokyo 104-8260 (JP)
(72) Inventor: INAMOTO, Kazuya, Niihama-shi, Ehime 792-8521 (JP); SHIMIZU, Taichi, Osaka-shi Osaka 554-8558 (JP); HIROSE, Osamu, Niihama-shi Ehime 792-8521 (JP)
(74) Representative: Winter, Brandl - Partnerschaft mbB
(86) International application number: PCT/JP2018/040090
(87) International publication number: WO 2019/097995

(56) References cited:
- EP-A1- 2 979 745
- EP-A1- 3 603 771
- EP-A1- 3 659 696
- WO-A1-2017/094473
- JP-A- 2014 069 146
- JP-A- 2015 071 712
- JP-A- 2016 117 045
- JP-A- 2016 193 394
- US-A1- 2015 165 384
- BUYSSE C ET AL: "Fabrication and oxygen permeability of gastight, macrovoid-free Ba"0"."5Sr"0"."5Co"0"."8Fe"0"."2O"3"-"@d capillaries for high temperature gas separation", JOURNAL OF MEMBRANE SCIENCE, ELSEVIER BV, NL, vol. 359, no. 1-2, 1 September 2010 (2010-09-01), pages 86-92, XP027093190, ISSN: 0376-7388 [retrieved on 2009-10-29]
- BUYSSE C ET AL: "Development, performance and stability of sulfur-free, macrovoid-free BSCF capillaries for high temperature oxygen separation from air", JOURNAL OF MEMBRANE SCIENCE, ELSEVIER BV, NL, vol. 372, no. 1, 9 February 2011 (2011-02-09), pages 239-248, XP028370743, ISSN: 0376-7388, DOI: 10.1016/J.MEMSCI.2011.02.011 [retrieved on 2011-02-16]

## Description

### TECHNICAL FIELD

The present invention relates to a manufacturing method and a manufacturing apparatus for an acidic gas separation membrane sheet.

### BACKGROUND ART

Energy saving can be realized as a process of separating an acidic gas such as carbon dioxide from a synthesis gas, a natural gas, and an exhaust gas, the synthesis gas produced in production plants is hydrogen, urea or the like, whereby an acidic gas membrane separation process recently becomes a focus of attention.

In the acidic gas membrane separation process, it has been known to use an acidic gas separation membrane sheet having a gel layer (for example, Japanese Patent Laying-Open No. 2009-195900 (Patent Literature 1), Japanese Patent Laying-Open No. 2013-49042 (Patent Literature 2), Norifumi Matsumiya, et al., and five others, "Separation of CO2 from model flue gas by facilitated transport membrane with hydrogel", Membrane, 2004, Vol. 29, No. 1, p. 66-72 (Non Patent Literature 1)). For example, in Patent Literature 1, a gas separation membrane sheet in which a hydrophilic porous membrane supporting a gel layer is sandwiched between two hydrophobic porous membranes is described.
Moreover, Patent Literature 3 relates to a composite for carbon dioxide separation, a module for carbon dioxide separation and a method for producing a composite for carbon dioxide separation.
NPL2 describes oxygen-permeable perovskites with mixed ionic-electronic conducting properties that may play an important role in the separation of oxygen from air which is needed in the oxy-fuel and pre-combustion technologies for the removal and capture of CO₂.
NPL3 is directed to the capture and storage of CO₂ from fossil-fuel power plants in order to counteract a pending anthropogenic global warming.

### CITATION LIST

### PATENT LITERATURE

PTL 1: Japanese Patent Laying-Open No. 2009-195900
PTL 2: Japanese Patent Laying-Open No. 2013-49042
PTL 3: US 2015/0165384 A1

### NON PATENT LITERATURE

NPL 1: Norifumi Matsumiya et al., "Separation of CO2 from Model Flue Gas by Facilitated Transport Membrane with Hydrogel", MEMBRANE, 2004, Vol. 29, No. 1, p. 66-72
NPL2: Buysse C. et al., "Fabrication and oxygen permeability of gastight, macrovoid-free Ba0.5Sr0.5Co0.8Fe0.2O3-δ capillaries for high temperature gas separation", Journal of Membrane Science, 2010, Vol. 359, No. 1-2, p. 86-92
NPL3: Buysse C. et al "Development, performance and stability of sulfur-free, macrovoid-free BSCF capillaries for high temperature oxygen separation from air", Journal of Membrane Science, 2011, Vol. 372, No. 1, p. 239-248

### SUMMARY OF INVENTION

### TECHNICAL PROBLEM

An object of the present invention is to provide a manufacturing method and a manufacturing apparatus for an acidic gas separation membrane sheet that can manufacture an acidic gas separation membrane sheet having good separation performance at a high yield.

### SOLUTION TO PROBLEM

The present invention provides a manufacturing method for an acidic gas separation membrane sheet as defined in claims.

### ADVANTAGEOUS EFFECTS OF INVENTION

A manufacturing method and a manufacturing apparatus for an acidic gas separation membrane sheet of the present invention can manufacture an acidic gas separation membrane sheet having good separation performance at a high yield.

### BRIEF DESCRIPTION OF DRAWINGS

Fig. 1 is a cross-sectional view showing an example of an acidic gas separation membrane sheet of the present invention.
Fig. 2 is a flow chart showing an example of a manufacturing method for an acidic gas separation membrane sheet of the present invention.
Fig. 3 is a schematic view showing an example of a manufacturing apparatus for making an acidic gas separation membrane sheet of the present invention.
Fig. 4(a) is a schematic view for illustrating an imaging method in an imaging step of the present invention, and Fig. 4(b) is a cross-sectional view taken along line P-P' of Fig. 4(a).
Fig. 5 is a schematic view for illustrating further steps in a manufacturing apparatus for making an acidic gas separation membrane sheet of the present invention.
Fig. 6 is a cross-sectional view showing an example of an acidic gas separation membrane sheet that is not manufactured by a manufacturing method for an acidic gas separation membrane sheet of the present invention.
Fig. 7 is a schematic perspective view showing a developed gas separation membrane element, in which a partially cutout portion is provided.
Fig. 8 is a schematic perspective view showing a gas separation membrane element, in which a partially developed portion is provided.

### DESCRIPTION OF EMBODIMENTS

Hereinafter, an embodiment of the present invention will be described with reference to the drawings. First, an example of an acidic gas separation membrane sheet that can be manufactured by a manufacturing method for an acidic gas separation membrane sheet of the present invention will be described. Thereafter, a manufacturing method and a manufacturing apparatus for an acidic gas separation membrane sheet will be described.

### (Acidic gas separation membrane sheet)

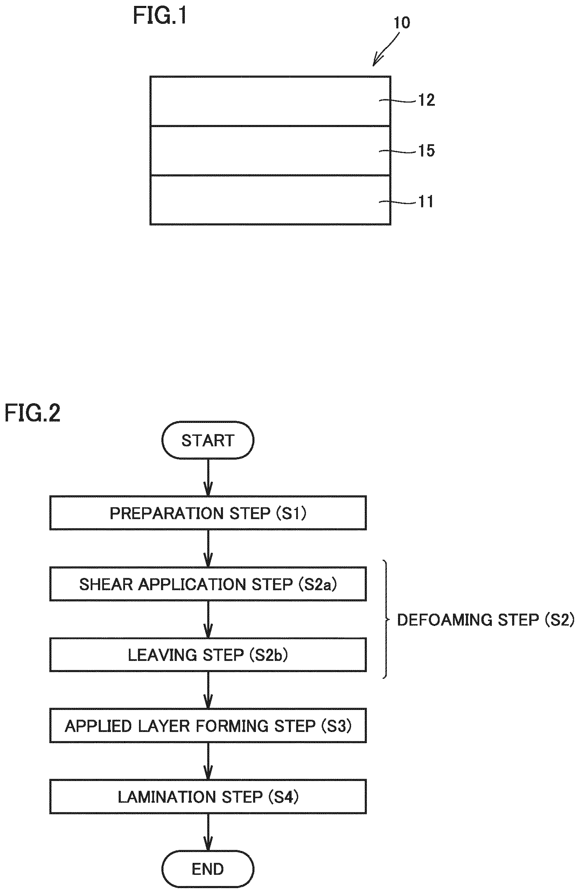

Fig. 1 is a cross-sectional view showing an example of an acidic gas separation membrane sheet of the present invention. As shown in Fig. 1, an acidic gas separation membrane sheet 10 includes a first porous layer 11, a hydrophilic resin composition layer 15, and a second porous layer 12 in this order. Acidic gas separation membrane sheet 10 is provided in a gas separation membrane element to be described later for separating an acidic gas from a source gas, and has acidic gas selective permeability that causes the acidic gas contained in the source gas to selectively permeate therethrough. The acidic gas means carbon dioxide (CO₂), hydrogen sulfide (H₂S), carbonyl sulfide, sulfur oxide (SOₓ), nitrogen oxide (NOₓ), or hydrogen halide such as hydrogen chloride. The source gas means a gas supplied to the gas separation membrane element, and the source gas contains at least an acidic gas.

In acidic gas separation membrane sheet 10, the high selective permeability of the acidic gas can be realized by a solution/diffusion mechanism and a facilitated transport mechanism. The solution/diffusion mechanism is a mechanism that separates an acidic gas utilizing a difference between solubilities of gas components contained in a source gas in a membrane material and a difference between diffusivities of the gas components contained in the source gas in a membrane. The facilitated transport mechanism is a mechanism in which an acidic gas contained in a source gas and a substance that reversibly reacts with an acidic gas contained in a membrane material (hereinafter, may be referred to as "acidic gas carrier") form a reaction product to promote the permeation of the acidic gas.

The following reaction formula (1) represents a reaction of CO₂ and a CO₂ carrier when the acidic gas is CO₂ and cesium carbonate (Cs₂CO₃) is used as the acidic gas carrier (CO₂ carrier). The symbol "↔" in the reaction formula (1) indicates that this reaction is a reversible reaction.

CO₂ + Cs₂CO₃ + H₂O ↔ 2CsHCO₃ (1)

As shown by the reaction formula (1), water is necessary for the reversible reaction of CO₂ and the CO₂ carrier. That is, in acidic gas separation membrane sheet 10 in which the acidic gas is CO₂, as shown by the above reaction formula (1), water in the membrane material causes the amount of permeation of the acidic gas to change. As the amount of the water in the membrane material is more, the amount of permeation of the acidic gas is more.

### (Hydrophilic resin composition layer)

Hydrophilic resin composition layer 15 has gas selective permeability that causes an acidic gas to selectively permeate therethrough in acidic gas separation membrane sheet 10. Hydrophilic resin composition layer 15 is a gel-like layer. Hydrophilic resin composition layer 15 contains at least a hydrophilic resin, and preferably contains a substance that reversibly reacts with an acidic gas (acidic gas carrier). Hydrophilic resin composition layer 15 may contain an additive other than the hydrophilic resin and the acidic gas carrier, as necessary. The thickness of hydrophilic resin composition layer 15 may be appropriately selected depending on separation performance required for acidic gas separation membrane sheet 10. Usually, it is preferably within a range of 0.1 µm to 600 µm, more preferably within a range of 0.5 µm to 400 µm, and particularly preferably within a range of 1 µm to 200 µm.

As shown in the reaction formula (1), in acidic gas separation membrane sheet 10, water is required for a reversible reaction of the acidic gas and the acidic gas carrier. Therefore, acidic gas separation membrane sheet 10 preferably includes a gel-like hydrophilic resin composition layer containing a hydrophilic resin having a hydrophilic group such as a hydroxyl group or an ion exchange group. It is more preferable that the hydrophilic resin composition layer contains a crosslinking-type hydrophilic resin in which molecular chains are crosslinked to form a network structure, exhibiting high water-holding properties. Since a pressure difference is applied to acidic gas separation membrane sheet 10 as a driving force for the permeation of an acidic gas through acidic gas separation membrane sheet 10, it is preferable to use a hydrophilic resin containing a crosslinking-type hydrophilic resin also from the viewpoint of a pressure resistance strength required for acidic gas separation membrane sheet 10.

It is preferable that the polymer forming the hydrophilic resin preferably has, for example, a structural unit derived from an alkyl acrylate, an alkyl ester methacrylate, a vinyl ester of a fatty acid, or a derivative thereof. Examples of such polymers having hydrophilicity include polymers obtained by polymerizing monomers such as acrylic acid, itaconic acid, crotonic acid, methacrylic acid, and vinyl acetate. Specific examples thereof include resins having a carboxyl group as an ion exchange group, such as a polyacrylic acid resin, a polyitaconic acid resin, a polycrotonic acid resin, and a polymethacrylic acid resin; a polyvinyl alcohol resin having a hydroxy group; and copolymers thereof such as an acrylic acid-vinyl alcohol copolymer resin, an acrylic acid-methacrylic acid copolymer resin, an acrylic acid-methyl methacrylate copolymer resin, and a methacrylic acid-methyl methacrylate copolymer resin. Among them, a polyacrylic acid resin that is a polymer of acrylic acid, a polymethacrylic acid resin that is a polymer of methacrylic acid, a polyvinyl alcohol resin obtained by hydrolyzing a polymer of vinyl acetate, an acrylate-vinyl alcohol copolymer resin obtained by saponifying a copolymer of methyl acrylate and vinyl acetate, and an acrylic acid-methacrylic acid copolymer resin that is a copolymer of acrylic acid and methacrylic acid are more preferable, and polyacrylic acid and an acrylate-vinyl alcohol copolymer resin are still more preferable.

The crosslinking-type hydrophilic resin may be prepared by causing a polymer exhibiting hydrophilicity to react with a crosslinking agent, or may also be prepared by copolymerizing a monomer that serves as the raw material of the polymer exhibiting hydrophilicity with a crosslinkable monomer. The crosslinking agent or the crosslinkable monomer is not particularly limited, and a conventionally known crosslinking agent or crosslinkable monomer can be used.

Examples of the crosslinking agent include conventionally known crosslinking agents such as an epoxy crosslinking agent, polyvalent glycidyl ether, a polyhydric alcohol, a polyvalent isocyanate, a polyvalent aziridine, a haloepoxy compound, a polyvalent aldehyde, a polyvalent amine, an organometallic crosslinking agent, and a metallic crosslinking agent. Examples of the crosslinkable monomer include conventionally known crosslinkable monomers such as divinylbenzene, N,N'-methylenebisacrylamide, trimethylolpropane triallylether, and pentaerythritol tetraallyl ether. As a crosslinking method, it is possible to use conventionally known techniques such as thermal crosslinking, ultraviolet crosslinking, electron beam crosslinking, radiation crosslinking, and photo-crosslinking as well as methods described in Japanese Patent Laying-Open Nos. 2003-268009 and H07-88171.

The substance that reversibly reacts with an acidic gas (acidic gas carrier) is present in hydrophilic resin composition layer 15 containing the hydrophilic resin, and reversibly reacts with the acidic gas dissolved in water present in hydrophilic resin composition layer 15, whereby the acidic gas carrier causes the acidic gas to selectively permeate through hydrophilic resin composition layer 15. Hydrophilic resin composition layer 15 contains, as the acidic gas carrier, at least one compound that reversibly reacts with the acidic gas. Specific examples of the acidic gas carrier include, in the case where the acidic gas is carbon dioxide, alkali metal carbonates, alkali metal bicarbonates, alkanolamine (for example, described in Japanese Patent No. 2086581 and the like), and alkali metal hydroxides (for example, described in WO 2016/024523 and the like); in the case where the acidic gas is sulfur oxide, sulfur-containing compounds, citrates of alkali metals, and transition metal complexes (for example, described in Japanese Patent No. 2879057 and the like); and in the case where the acidic gas is nitrogen oxide, alkali metal nitrites and transition metal complexes (for example, described in Japanese Patent No. 2879057 and the like).

Hydrophilic resin composition layer 15 may also contain, for example, a hydration reaction catalyst for the acidic gas, a surfactant to be described later, and the like as an additive in addition to the hydrophilic resin and the acidic gas carrier. The hydration reaction catalyst for the acidic gas can improve the reaction rate of the acidic gas and the acidic gas carrier. The hydration reaction catalyst for the acidic gas preferably contains an oxo acid compound, more preferably contains at least one elemental oxo acid compound selected from the group consisting of group 14 elements, group 15 elements, and group 16 elements, and still more preferably contains at least one selected from the group consisting of a tellurious acid compound, a selenious acid compound, an arsenious acid compound, and an orthosilicic acid compound.

### (First porous layer and second porous layer)

To first porous layer 11, the hydrophilic resin composition liquid for forming hydrophilic resin composition layer 15 is applied, as described later. First porous layer 11 has a porosity having high gas permeability so as not to cause the diffusion resistance of the source gas supplied to hydrophilic resin composition layer 15, particularly the gas component that is contained in the source gas and selectively permeates through hydrophilic resin composition layer 15 in acidic gas separation membrane sheet 10. First porous layer 11 may have a single-layer structure or a laminated structure including two more layers. It is preferable that first porous layer 11 has heat resistance depending on process conditions in a plant in which application of acidic gas separation membrane sheet 10 is assumed. Herein, the term "heat resistance" means that no curl occurs which can be visually confirmed due to heat shrinkage or heat melting even after the member such as first porous layer 11 is stored for 2 hours under the temperature conditions greater than or equal to the process condition, so that the form of the member before preservation is maintained.

Second porous layer 12 is laminated on the exposed surface of hydrophilic resin composition layer 15 formed on first porous layer 11 as described later. Second porous layer 12 has a porosity having high gas permeability so as not to cause the diffusion resistance of the source gas supplied to hydrophilic resin composition layer 15, particularly the gas component that is contained in the source gas and selectively permeates through hydrophilic resin composition layer 15 in acidic gas separation membrane sheet 10. Second porous layer 12 may have a single-layer structure or a laminated structure including two more layers. It is preferable that second porous layer 12 has heat resistance depending on process conditions in a plant in which application of acidic gas separation membrane sheet 10 is assumed.

First porous layer 11 may be hydrophobic, and the contact angle of water at a temperature of 25 °C may be greater than or equal to 90 degrees, greater than or equal to 95 degrees, or greater than or equal to 100 degrees. Second porous layer 12 is preferably hydrophobic. Specifically, in second porous layer 12, the contact angle of water at a temperature of 25 °C is preferably greater than or equal to 90 degrees, more preferably greater than or equal to 95 degrees, and still more preferably greater than or equal to 100 degrees. When a source gas containing moisture is fed to acidic gas separation membrane sheet 10, acidic gas separation membrane sheet 10 may be condensed, and water generated by the condensation may damage hydrophilic resin composition layer 15. However, first porous layer 11 and second porous layer 12 are hydrophobic, whereby the water generated by the condensation penetrates into hydrophilic resin composition layer 15, which can provide suppressed damage to hydrophilic resin composition layer 15. The contact angle of water can be measured with a contact angle meter (for example, manufactured by Kyowa Interface Science Co., Ltd.; trade name: "DropMaster 500").

First porous layer 11 is a layer to which a hydrophilic resin composition liquid for forming hydrophilic resin composition layer 15 is applied, as described later. This case includes a state where a part of resulting hydrophilic resin composition layer 15 penetrates into the pores of first porous layer 11. Meanwhile, second porous layer 12 is a layer laminated on hydrophilic resin composition layer 15, as described later. In this case, the degree of penetration of hydrophilic resin composition layer 15 into the pores of second porous layer 12 is less than that of first porous layer 11. Therefore, the peel strength (hereinafter, sometimes referred to as "second peel strength") between second porous layer 12 and hydrophilic resin composition layer 15 in acidic gas separation membrane sheet 10 is less than the peel strength (hereinafter, sometimes referred to as "first peel strength") between first porous layer 11 and hydrophilic resin composition layer 15.

A peel strength can be obtained by a peel tester. Specifically, the peel strength can be measured for a 25 mm × 100 mm sample for measurement that has been cut out of acidic gas separation membrane sheet 10 in an environment of a temperature of 25 °C and a humidity of 50 %RH for at least 2 hours, then attaching the sample to the peel tester, and measuring the sample under the condition of a peel angle of 180 degrees and a peel speed of 300 mm/min.

The magnitude relationship between the first peel strength and the second peel strength can be confirmed by, for example, the measurement of the peel strength described above. For example, when second porous layer 12 of acidic gas separation membrane sheet 10 is peeled off under a predetermined condition using a peel tester, and hydrophilic resin composition layer 15 is present on the surface on the side of first porous layer 11, the second peel strength can be said to be less than the first peel strength. When hydrophilic resin composition layer 15 is present on the surface on the side of second porous layer 12, the second peel strength can be said to be greater than the first peel strength.

Each of first porous layer 11 and second porous layer 12 preferably contains a resin material. Examples of the resin material contained in first porous layer 11 and second porous layer 12 include polyolefin resins such as polyethylene (PE) and polypropylene (PP); fluorine-containing resins such as polytetrafluoroethylene (PTFE), polyvinyl fluoride (PVF), and polyvinylidene fluoride (PVDF); polystyrene (PS), polyester resins such as, polyethylene terephthalate (PET), and polyethylene naphthalate; and resin materials such as polyethersulfone (PES), polyphenylene sulfide (PPS), polysulfone (PSF), polyimide (PI), polyetherimide (PEI), polyetheretherketone (PEEK), high-molecular-weight polyesters, heat-resistant polyamides, aramids, and polycarbonates. Among these, in views of water repellency and heat resistance, polypropylene (PP) or a fluorine-containing resin is preferable, and polypropylene (PP) or polytetrafluoroethylene (PTFE) is more preferable. The resin material forming first porous layer 11 and the resin material forming second porous layer 12 may be the same material or different materials.

The thickness of first porous layer 11 and the thickness of second porous layer 12 are not particularly limited, and from the viewpoint of a mechanical strength, usually, the thickness is preferably within a range of 10 µm to 3000 µm, more preferably within a range of 10 µm to 500 µm, and still more preferably within a range of 15 µm to 150 µm. The thickness of first porous layer 11 and the thickness of second porous layer 12 may be the same as or different from each other. The porosity of first porous layer 11 and the porosity of second porous layer 12 are preferably within a range of 5% to 99%, and more preferably within a range of 30% to 90%. The porosity of first porous layer 11 and the porosity of second porous layer 12 may be the same as or different from each other.

In acidic gas separation membrane sheet 10, a porous body may be further laminated on surfaces of first porous layer 11 and second porous layer 12 not in contact with hydrophilic resin composition layer 15 for the purpose of additionally imparting a strength to first porous layer 11 and second porous layer 12. As the porous body, in addition to the resin materials exemplified in first porous layer 11 and second porous layer 12, inorganic materials such as metals, glasses, ceramics and the like, and nonwoven fabrics or woven fabrics containing these materials these materials can be suitably used.

### (Manufacturing Method for acidic gas separation membrane sheet)

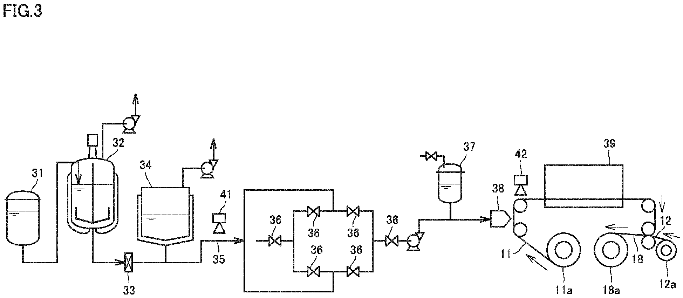

Hereinafter, a manufacturing method for an acidic gas separation membrane sheet 10 will be described with reference to the drawings. Fig. 2 is a flow chart showing an example of a manufacturing method for an acidic gas separation membrane sheet of the present invention. Fig. 3 is a schematic view of a making apparatus for manufacturing acidic gas separation membrane sheet 10. As shown in Fig. 2, a manufacturing method for an acidic gas separation membrane sheet 10 includes:
a step of preparing a hydrophilic resin composition liquid for forming a hydrophilic resin composition layer 15 (hereinafter, referred to as "preparation step (S1)");
a step of removing bubbles contained in the hydrophilic resin composition liquid (hereinafter, referred to as "defoaming step (S2)");
a step of applying the hydrophilic resin composition liquid onto a first porous layer 11 and forming an applied layer on first porous layer 11 (hereinafter, referred to as "applied layer forming step (S3)"); and
a step of laminating a second porous layer 12 on the applied layer and forming a laminated body 18 (hereinafter, referred to as "lamination step (S4)"),
wherein the hydrophilic resin composition liquid contains a hydrophilic resin and a medium, and
the defoaming step includes the steps of: applying a shear to the hydrophilic resin composition liquid (hereinafter, referred to as "shear application step (S2a)"); and
leaving the hydrophilic resin composition liquid (hereinafter, referred to as "leaving step (S2b)").

The manufacturing method for an acidic gas separation membrane sheet 10 may include a step of adjusting the hydrophilic resin composition liquid to a predetermined temperature between preparation step (S 1) and defoaming step (S2) (hereinafter, referred to as "temperature control step"). Furthermore, the manufacturing method for an acidic gas separation membrane sheet 10 may include a step of confirming bubbles mixed in the hydrophilic resin composition liquid between defoaming step (S2) and applied layer forming step (S3) (hereinafter, referred to as "inspection step").

As shown in Fig. 3, acidic gas separation membrane sheet 10 is preferably manufactured in a so-called roll-to-roll method including: a step of unrolling a first porous layer 11 from a first porous layer rolled body 11a wound in a roll to supply first porous layer 11 to applied layer forming step (S3) and a step of unrolling a second porous layer 12 from a second porous layer rolled body 12a wound in a roll to supply second porous layer 12 to lamination step (S4), wherein a laminated body 18 is obtained by performing applied layer forming step (S3) and lamination step (S4) while continuously conveying first porous layer 11 and second porous layer 12, and laminated body 18 is wound in a roll.

Acidic gas separation membrane sheet 10 manufactured by the manufacturing method may be processed into a so-called spiral-wound type, and used for the gas separation membrane element. Acidic gas separation membrane sheet 10 may be wound in a roll in the manufacturing method as described above. Acidic gas separation membrane sheet 10 wound in the roll may be unrolling to be processed into gas separation membrane element such as flat-membrane type, pleated type, plate-and-frame type gas and the like in addition to the spiral-wound type. Acidic gas separation membrane sheet 10 made by the manufacturing method can have good separation performance in the gas membrane separation process even when the acidic gas separation membrane sheet is wound in a roll or processed into a spiral-wound type gas separation membrane element.

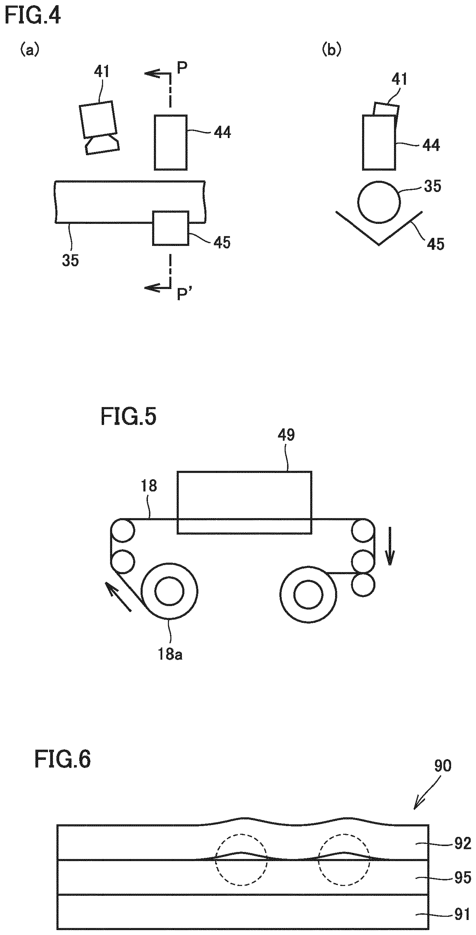

Meanwhile, when an acidic gas separation membrane sheet 90 that is not manufactured by the manufacturing method, and is shown in, for example, Fig. 6 is used in the gas membrane separation process, an acidic gas separation membrane sheet having poor separation performance may be present. The cause is as follows:
(i) in acidic gas separation membrane sheet 90 having poor separation performance, wrinkles occur in a second porous layer 92;
(ii) the wrinkles are observed when hydrophilic resin composition layer 95 and second porous layer 92 are not uniformly bonded due to abnormities such as bubble marks occurring in the surface of hydrophilic resin composition layer 95 on which second porous layer 92 is laminated, and holes remaining in the inside of the hydrophilic resin composition layer 95, which causes a partial adhesion failure as in a portion surrounded by a broken line in Fig. 6; and
(iii) in acidic gas separation membrane sheet 90 having an adhesion failure portion, slippage occurs between hydrophilic resin composition layer 95 and second porous layer 92 in the adhesion failure portion due to a friction load and the like between the sheets when wound in a roll or processed into a spiral-wound type gas separation membrane element, which is apt to cause wrinkles to occur in second porous layer 92; and it is considered that the wrinkles cause dents and holes to occur in hydrophilic resin composition layer 95, as a result of which good separation performance cannot be obtained in the gas membrane separation process.

In the manufacturing method for an acidic gas separation membrane sheet 10, in particular, defoaming step (S2) including shear application step (S2a) and leaving step (S2b) is provided, whereby the above-described methods (i) to (iii) are suppressed, which make it possible to make acidic gas separation membrane sheet 10 having good separation performance at a high yield.

Hereinafter, steps of the manufacturing method for an acidic gas separation membrane sheet 10 will be described in detail.

### (Preparation step (S 1))

Preparation step (S1) is the step of preparing a hydrophilic resin composition liquid for forming hydrophilic resin composition layer 15. The hydrophilic resin composition liquid may contain a hydrophilic resin and a medium, and may further contain a substance that reversibly reacts with an acidic gas (acidic gas carrier). In preparation step (S 1), for example, raw materials (hydrophilic resin, medium and the like) for obtaining the hydrophilic resin composition liquid are mixed at a temperature at which the raw material composition does not change, for example, normal temperature (usually, 20 °C), whereby the hydrophilic resin composition liquid can be prepared. The hydrophilic resin composition liquid is an application liquid for applying the hydrophilic resin composition liquid onto first porous layer 11 to form hydrophilic resin composition layer 15. The hydrophilic resin composition liquid obtained in preparation step (S 1) can be stored in a raw material tank 31, as shown in Fig. 3.

As the hydrophilic resin and the acidic gas carrier, those described above can be used. Examples of the medium include protic polar solvents such as water, and alcohols (such as methanol, ethanol, 1-propanol, and 2-propanol); nonpolar solvents such as toluene, xylene, and hexane; and aprotic polar solvents such as ketones (such as acetone, methyl ethyl ketone, and methyl isobutyl ketone), N-methylpyrrolidone, N,N-dimethylacetamide, and N,N-dimethylformamide. A single kind of medium may be used alone, or greater than or equal to two kinds of media may be used in combination as long as they are compatible with each other. Among these, a medium containing at least one selected from the group consisting of water and alcohols (such as methanol, ethanol, 1-propanol, and 2-propanol) is preferable, and a medium containing water is more preferable.

A surfactant may be added to the hydrophilic resin composition liquid as necessary. By adding the surfactant to the hydrophilic resin composition liquid, the surfactant is unevenly distributed at the interface between hydrophilic resin composition layer 15 and each of first porous layer 11 and second porous layer 12 when the hydrophilic resin composition liquid is applied to first porous layer 11, or second porous layer 12 is laminated on hydrophilic resin composition layer 15. This can provide improved wettability of hydrophilic resin composition layer 15 with first porous layer 11 and second porous layer 12 to improve the unevenness of the film thickness, and the like. The surfactant is not particularly limited, and, for example, conventionally known surfactants such as polyoxyethylene polyoxypropylene glycols, polyoxyethylene alkyl phenyl ethers, polyoxyethylene alkyl ethers, fluorine-based surfactants, and silicone-based surfactants can be used. A single kind of surfactant may be used alone, or greater than or equal to two kinds of surfactants may be used in combination. The hydrophilic resin composition liquid may contain the hydration reaction catalyst for the acidic gas.

The hydrophilic resin composition liquid preferably has a viscosity of greater than or equal to 100 Pa·s at a temperature of 25 °C and a shear rate of 0.1 s⁻¹, and usually has a viscosity of less than or equal to 1000 Pa s from the viewpoints of a uniform thickness of a layer of the hydrophilic resin composition liquid applied onto first porous layer 11 (hereinafter, may be referred to as "liquid layer"), and the penetration of the hydrophilic resin composition liquid into the pores of first porous layer 11. According to the manufacturing method for an acidic gas separation membrane sheet 10 of the present embodiment, the bubbles contained in the conductive resin composition liquid can be removed by providing a defoaming step (S2) described below even when the hydrophilic resin composition liquid has a high viscosity as described above. This can suppress the occurrence of abnormalities such as bubble marks and pores in hydrophilic resin composition layer 15 of acidic gas separation membrane sheet 10 to suppress the occurrence of the wrinkles in second porous layer 12 when acidic gas separation membrane sheet 10 is wound or processed into a spiral-wound type. The viscosity of the hydrophilic resin composition liquid at a temperature of 25 °C and a shear rate of 0.1 s⁻¹ can be measured by a rheometer (for example, manufactured by TA Instruments Co., Ltd.; trade name: "AR 2000 ex").

### (Defoaming step (S2))

Defoaming step (S2) is performed between preparation step (S1) and applied layer forming step (S3) in order to remove bubbles contained in the hydrophilic resin composition liquid prepared in preparation step (S1). The hydrophilic resin composition liquid is an application liquid used to form gel-like hydrophilic resin composition layer 15, and has a relatively high viscosity as described above, so that bubbles once mixed in the hydrophilic resin composition liquid are less likely to be removed in a natural state. Therefore, in defoaming step (S2) performed prior to applied layer forming step (S3), the occurrence of abnormalities such as bubble marks and holes in hydrophilic resin composition layer 15 can be suppressed by actively removing the bubbles in the hydrophilic resin composition liquid. This makes it possible to suppress the occurrence of wrinkles in second porous layer 12 when acidic gas separation membrane sheet 10 is wound or processed into a spiral-wound type gas separation membrane element.

Defoaming step (S2) includes a shear application step (S2a) of applying a shear to the hydrophilic resin composition liquid, and a leaving step (S2b) of leaving the hydrophilic resin composition liquid. Shear application step (S2a) and leaving step (S2b) are preferably repeated once or twice or more. It is preferable that leaving step (S2b) is finally performed in defoaming step (S2). As described above, the hydrophilic resin composition liquid has a relatively high viscosity, so that, in defoaming step (S2), the resin composition liquid cannot be sufficiently defoamed by only one of shear application step (S2a) and leaving step (S2b).

Shear application step (S2a) includes a step of causing the hydrophilic resin composition liquid to pass through a filter (hereinafter, referred to as filtration step). Shear application step (S2a) may further include a step of stirring the hydrophilic resin composition liquid (hereinafter, referred to as stirring step). In shear application step (S2a), both the stirring step and the filtration step are more preferably performed. In this case, it is preferable that the stirring step is first performed, and the filtration step is then performed.

In shear application step (S2a), for example, as shown in Fig. 3, the stirring step is first performed by stirring the hydrophilic resin composition liquid in stirring tank 32. Thereafter, the hydrophilic resin composition liquid stirred in stirring tank 32 can be caused to pass through a filter 33 to perform the filtration step.

In the stirring step, the viscosity of the hydrophilic resin composition liquid is lowered by stirring the hydrophilic resin composition liquid in stirring tank 32 to apply a shear. This can promote the separation of the bubbles from the hydrophilic resin composition liquid to remove the bubbles. Examples of a stirring device that can be used in the stirring step include a rotor blade type stirrer shown in Fig. 3, a milder, a pressure type homogenizer, a high speed rotary shear type homogenizer, a planetary type stirrer, and a centrifuge. As the shape of the rotor blade, a large blade and an anchor blade that sufficiently stir an gas-liquid interface part and generate flow that does not prevent the bubbles from rising are suitable. The stirring conditions in the stirring step are not particularly limited. It is preferable to perform stirring so that a shear rate is set to 5 to 700 s⁻¹, and it is preferable that the hydrophilic resin contained in the hydrophilic resin composition liquid is not broken by shearing. The diameter of stirring tank 32 is preferably the same as or greater than that of the raw material tank 31. Thereby, the area of the gas-liquid interface formed by using stirring tank 32 can be increased, whereby the bubbles can be efficiently removed from the hydrophilic resin composition liquid in the stirring step.

In the filtration step, the hydrophilic resin composition liquid is caused to pass through filter 33 to apply a shear to the hydrophilic resin composition liquid as in the stirring step to lower the viscosity of the hydrophilic resin composition liquid. This can promote the separation of the bubbles from the hydrophilic resin composition liquid to remove the bubbles. Examples of filter 33 that can be used in the filtration step include a membrane filter, a depth filter, and a hollow fiber membrane. The filtration conditions in the filtration step are not particularly limited. It is preferable to perform filtration so that a shear rate is set to 5 to 700 s⁻¹, and it is preferable to adjust the opening and filtration area of the filter, and a flow volume depending on a pressure loss in the filtration step. In the filtration step, examples of a method for feeding the hydrophilic resin composition liquid to filter 33 include pressure feeding by pressurizing stirring tank 32, and discharge using a pump. The pump is preferably a rotary type pump, and examples thereof include a gear pump, a rotary pump, and a mono pump.

Leaving step (S2b) is not particularly limited as long as the hydrophilic resin composition liquid can be left to remove the bubbles. For example, as shown in Fig. 3, leaving step (S2b) can include the steps of: leaving the hydrophilic resin composition liquid stirred in the stirring step in stirring tank 32 (hereinafter, referred to as "leaving step-1"); and leaving the hydrophilic resin composition liquid that has passed through filter 33 in the filtration step performed following leaving step-1 in defoaming tank 34 (hereinafter, referred to as "leaving step-2). Leaving step (S2b) is performed under at least one of a reduced pressure atmosphere and a heated atmosphere, and preferably performed under a reduced pressure atmosphere, from the viewpoint of the efficiency of removal of the bubbles.

The pressure under the reduced pressure atmosphere is preferably greater than or equal to 1.01 times of the vapor pressure of the medium contained in the hydrophilic resin composition liquid, more preferably greater than or equal to 1.05 times, and usually less than or equal to 2 times. By setting the above-described pressure range, the boiling of the hydrophilic resin composition liquid during the pressure reduction can be suppressed.

The temperature under the heated atmosphere is not particularly limited as long as the temperature is higher than or equal to the temperature of the hydrophilic resin composition liquid in the shear application step, and the medium contained in the hydrophilic resin composition liquid does not boil. The temperature of the heated atmosphere is preferably higher than or equal to 25 °C, and preferably higher than or equal to 30 °C. The temperature is preferably lower than 90 °C, and more preferably lower than or equal to 85 °C. An atmosphere heated so that a temperature during heating in a temperature control step to be described later is maintained also in leaving step (S2b) is also included in the heated atmosphere.

When leaving step (S2b) is performed under a reduced pressure atmosphere, for example, as shown in Fig. 3, the pressure of stirring tank 32 and defoaming tank 34 is reduced using the pressure reducing pump, the vacuum pump or the like, which makes it possible to perform leaving step (S2b) under an atmosphere reduced to a predetermined pressure. Thereby, the bubbles contained in the hydrophilic resin composition liquid can be efficiently removed.

When leaving step (S2b) is performed under the heated atmosphere, by using a heating device such as a heat medium flow jacket, a resistance heating device, an induction heating device, or a microwave irradiation device provided in stirring tank 32 or defoaming tank 34, the hydrophilic resin composition liquid stored in stirring tank 32 and defoaming tank 34 may be heated. As a result, the viscosity of the hydrophilic resin composition liquid is reduced, whereby the bubbles are likely to be removed.

As described above, when leaving step (S2b) includes leaving step-1 and leaving step-2, both leaving step-1 and leaving step-2 may be performed under the reduced pressure atmosphere or the heated atmosphere, or may be performed under different atmospheres. Leaving step-1 may be omitted, the filtration step may be performed following the stirring step, but it is preferable that leaving step-2 is not omitted. A leaving time for performing leaving step (S2b) is not particularly limited, but, for example, there may be selected a time during which the viscosity decreased in shear application step (S2a) is increased, and the viscosity can be reduced to the lower limit of the rate of rise of the bubbles contained in the hydrophilic resin composition liquid effective for defoaming. For example, leaving times in leaving step-1 and leaving step-2 can be set to be greater than or equal to 10 hours when the hydrophilic resin composition liquid has a viscosity of greater than or equal to 100 Pa·s at a temperature of 25 °C and a shear rate of 0.1 s⁻¹.

### (Applied layer forming step (S3))

Applied layer forming step (S3) is a step of applying the hydrophilic resin composition liquid from which bubbles have been removed in defoaming step (S2) onto first porous layer 11 to form an applied layer on the first porous layer 11. When leaving step (S2a) is performed under a reduced pressure atmosphere, it is preferable to perform applied layer forming step (S3) after releasing the pressure reduction. When leaving step (S2a) is performed under a heated atmosphere, or when a temperature control step to be described later is included, it is preferable to perform applied layer forming step (S3) after adjusting the hydrophilic resin composition liquid to be applied to an appropriate viscosity, or adjusting the temperature of the hydrophilic resin composition liquid in order to suppress the occurrence of bubbles due to a gas dissolved in the hydrophilic resin composition liquid. Applied layer forming step (S3) is preferably performed at a temperature of 15 to 30 °C under an atmospheric pressure.

In applied layer forming step (S3), for example, as shown in Fig. 3, the hydrophilic resin composition liquid delivered from a defoaming tank 34 is supplied to an application liquid tank 37 including a slot die 38. By providing the inlet/outlet port of the hydrophilic resin composition liquid on the bottom part of application liquid tank 37, the gas in application liquid tank 37 can be prevented from being mixed into the hydrophilic resin composition liquid supplied to slot die 38. The hydrophilic resin composition liquid is continuously applied onto first porous layer 11 continuously unwound from a first porous layer rolled body 11a in which first porous layer 11 is wound in a roll from slot die 38. Subsequently, first porous layer 11 onto which the hydrophilic resin composition liquid is applied is transported to a drying furnace 39, and the medium is removed from the hydrophilic resin composition liquid (liquid layer) on first porous layer 11 to form an applied layer. First porous layer rolled body 11a is preferably obtained by rolling first porous layer 11 having a length of greater than or equal to 10 m, and more preferably greater than or equal to an integral multiple of the unit length of the acidic gas separation membrane sheet required for making one gas separation membrane element.

Fig. 3 shows a method for applying the hydrophilic resin composition liquid using slot die 38. The method for applying the hydrophilic resin composition liquid onto first porous layer 11 is not limited thereto. Examples of the applying method include spin coating, bar coating, die coating, blade coating, air-knife coating, gravure coating, roll coating, spray coating, dip coating, comma roll method, kiss coater method, screen printing, and inkjet printing. The application amount of the hydrophilic resin composition liquid in a weight per unit area (solid content per unit area) is preferably within a range of 1 g/m² to 1000 g/m², more preferably within a range of 5 g/m² to 750 g/m², and still more preferably within a range of 10 g/m² to 500 g/m². The adjustment of the weight per unit area can be controlled by the application speed of the hydrophilic resin composition liquid (for example, the transport speed of first porous layer 11), the concentration of the hydrophilic resin composition liquid, and the discharge amount of the hydrophilic resin composition liquid. The hydrophilic resin composition liquid may be applied onto first porous layer 11 in a stripe pattern or a dot pattern.

The temperature of the hydrophilic resin composition liquid applied in applied layer forming step (S3) may be appropriately determined according to the composition and the concentration. An excessively high temperature may evaporate the medium from the hydrophilic resin composition liquid (liquid layer) applied onto first porous layer 11 in a large amount, possibly changing the composition and the density, and leaving a mark of evaporation in hydrophilic resin composition layer 15. The temperature is thus preferably higher than or equal to 15 °C, and preferably lower than or equal to the boiling point of the medium in use by 5 °C. For example, when water is used as the medium, the temperature of the hydrophilic resin composition liquid in applied layer forming step (S3) is preferably within a range of 15 °C to 95 °C, and usually within a temperature range of 15 °C to 30 °C.

In drying furnace 39 shown in Fig. 3, the applied layer can be formed by removing the medium from the hydrophilic resin composition liquid (liquid layer) applied onto first porous layer 11. A method for removing the medium is not particularly limited, and a method is preferable, in which heated air is allowed to flow to evaporate the medium for removal, and the liquid layer is dried. Specifically, for example, the following method may be performed. The inside of drying furnace 39 is adjusted to a predetermined temperature and a predetermined humidity, and first porous layer 11 onto which the hydrophilic resin composition liquid has been applied is carried into drying furnace 39, to evaporate the medium for removal from the hydrophilic resin composition liquid on first porous layer 11. The drying temperature in drying furnace 39 may be appropriately determined according to the medium contained in the hydrophilic resin composition liquid and the type of first porous layer 11. Usually, the drying temperature is preferably higher than the freezing point of the medium and lower than the melting point of the material forming first porous layer 11. Normally, the drying temperature is suitably within a range of 60 °C to 200 °C. The drying step may be performed in a state where the inside of drying furnace 39 is divided and the sections are set to different temperatures. In this case, the temperatures of the sections of the inlet and outlet portions are preferably lower than the temperature of the section of a central portion.

In applied layer forming step (S3), the application and drying of the hydrophilic resin composition liquid may be repeated twice or more to form a hydrophilic resin composition layer having two or more applied layers. The hydrophilic resin composition layer is composed of greater than or equal to two applied layers, whereby the occurrence of pinholes caused by the unevenness of hydrophilic resin composition layer 15 and the like can be suppressed. When the hydrophilic resin composition layer is formed as greater than or equal to two applied layers, coating conditions such as the composition and application amount of the hydrophilic resin composition liquid, and drying conditions may be different from each other in the applied layers, and may be the same.

### (Lamination step (S4))

Lamination step (S4) is a step of laminating second porous layer 12 on the applied layer formed on first porous layer 11 in applied layer forming step (S3) to form laminated body 18. Second porous layer 12 is laminated on a side opposite to first porous layer 11 of the applied layer. In lamination step (S4), for example, as shown in Fig. 3, second porous layer 12 is continuously unrolled from second porous layer rolled body 12a in which second porous layer 12 is wound in a roll, and second porous layer 12 is laminated on the exposed surface of the applied layer formed on first porous layer 11 to form laminated body 18. Second porous layer rolled body 12a is preferably obtained by rolling second porous layer 12 having a length of greater than or equal to 10 m, and more preferably greater than or equal to an integral multiple of the unit length of the acidic gas separation membrane sheet required for making one gas separation membrane element.

Following lamination step (S4), the step of winding laminated body 18 in a roll may be performed to form a laminated-body rolled body 18a.

### (Temperature control step)

Temperature control step is performed to adjust the hydrophilic resin composition liquid to a predetermined temperature before defoaming step (S2). Thereby, the defoaming efficiency of the hydrophilic resin composition liquid in shear application step (S2a) or leaving step (S2b) can be improved. The predetermined temperature is not particularly limited as long as the medium contained in the hydrophilic resin composition liquid does not boil, and is preferably higher than the temperature of the hydrophilic resin composition liquid in applied layer forming step (S3). The temperature is preferably higher than the temperature at which the hydrophilic resin composition liquid is prepared. The predetermined temperature is, for example, preferably lower than 90 °C, more preferably lower than or equal to 85 °C, further preferably lower than or equal to 80 °C, and usually higher than or equal to 25 °C. The temperature control step can be performed, for example, by stirring tank 32 shown in Fig. 3.

During shear application step (S2a) and leaving step (S2b), the hydrophilic resin composition liquid is preferably maintained at the predetermined temperature adjusted in the temperature control step. Therefore, in order to keep the temperature of the temperature-controlled hydrophilic resin composition liquid at a constant level as much as possible, stirring tank 32, filter 33, defoaming tank 34, and filter 33 or a pipe for feeding the hydrophilic resin composition liquid from stirring tank 32 to defoaming tank 34 preferably include a heat medium flow jacket, a heat insulating material and the like.

### (Inspection step)

Inspection step is the step performed between defoaming step (S2) and applied layer forming step (S3). In the inspection step, bubbles mixed in the hydrophilic resin composition liquid are confirmed. In the manufacturing method for acidic gas separation membrane sheet 10, the inspection step may or may not be provided. However, by providing the inspection step, acidic gas separation membrane sheet 10 having excellent separation performance is likely to be manufactured at a high yield. In the inspection step, foreign matters can be detected together with the bubbles.

The hydrophilic resin composition liquid that has passed through defoaming step (S2) is delivered into a pipe 35 toward applied layer forming step (S3), for example, as shown in Fig. 3, whereby the hydrophilic resin composition liquid delivered into pipe 35 is preferably subjected to the inspection step. As shown in Fig. 3, the inspection step preferably includes a step of imaging the hydrophilic resin composition liquid delivered from defoaming tank 34 by a pump or the like and flowing in pipe 35 (hereinafter, referred to as "imaging step") and a step of detecting bubbles mixed in the hydrophilic resin composition liquid using an image obtained in the imaging step (hereinafter, referred to as "bubble detecting step"). Furthermore, the inspection step preferably includes a step of controlling the supply of the hydrophilic resin composition liquid flowing in pipe 35 to an application liquid tank 37 based on the detection results of the bubbles in the bubble detecting step (hereinafter, referred to as "supply control step").

Figs. 4(a) and 4(b) are schematic views for illustrating an imaging method in an imaging step. In the imaging step, the hydrophilic resin composition liquid flowing in pipe 35 is imaged using an imaging device 41 such as a camera. For example, as shown in Figs. 4(a) and 4(b), the imaging step is preferably performed using a light source 44 emitting visible light and/or infrared light to the hydrophilic resin composition liquid in pipe 35, and a reflection plate 45 such as a mirror disposed on the opposite side of light source 44 with pipe 35 interposed therebetween, in addition to imaging device 41. In the imaging step, in order to detect bubbles of the hydrophilic resin composition liquid in pipe 35, pipe 35 preferably has light permeability capable of causing visible light and/or infrared light from light source 44 to permeate therethrough. It is preferable that the position and angle of reflection plate 45 are adjusted so that reflection plate 45 directly reflects the visible light and/or infrared light incident on reflection plate 45 from light source 44, and the hydrophilic resin composition liquid in pipe 35 is irradiated with the reflected light. It is more preferable that the position and angle of reflection plate 45 are adjusted so that the hydrophilic resin composition liquid in pipe 35 is also irradiated with the visible light and/or the infrared light permeating through the hydrophilic resin composition liquid in pipe 35 from light source 44 and incident on reflection plate 45 again. The position and angle of reflection plate 45 may be adjusted so that an image of the hydrophilic resin composition liquid observed from a side surface of pipe 35 that cannot be directly imaged by imaging device 41 is reflected (a side surface located on the opposite side to a side surface facing imaging device 41, or a side surface located in a direction perpendicular to a direction in which imaging device 41 and pipe 35 face each other).

Imaging device 41 images not a hydrophilic resin composition liquid to which light source 44 emits visible light and/or infrared light but a hydrophilic resin composition liquid in which the emitted visible light and/or infrared light propagates. Imaging device 41 may simultaneously image an image reflected on reflection plate 45 (reflection image from reflection plate 45). In this case, an observed image of the hydrophilic resin composition liquid in pipe 35 from the side surface that cannot be directly imaged by imaging device 41 is reflected on reflection plate 45.

In Figs. 4(a) and 4(b), light source 44 emits visible light and/or infrared light from one direction, but a plurality of light sources may be provided to emit visible light and/or infrared light from a plurality of directions. In Figs. 4(a) and 4(b), imaging device 41 performs imaging from one direction, but a plurality of imaging devices may be provided to image the hydrophilic resin composition liquid in the pipe from a plurality of directions.

In the bubble detection step, bubbles mixed in the hydrophilic resin composition liquid in pipe 35 are detected using the image imaged by imaging device 41. The bubbles can be detected by, for example, analyzing the image imaged by imaging device 41 using a binarization processing method in which each pixel is divided into an abnormal part and a normal part based on whether the density value of each pixel is greater than or equal to a preset threshold value, or less than the threshold value. In the bubble detecting step, foreign matters mixed in the hydrophilic resin composition liquid can also be detected together with the detection of the bubbles.

In the supply control step, the supply of the hydrophilic resin composition liquid to applied layer forming step (S3) is controlled based on the detected amount of bubbles detected in the bubble detection step. In the supply control step, control is performed so that the hydrophilic resin composition liquid in which the detected amount of the abnormal part is less than or equal to the threshold value is supplied to applied layer forming step (S3). It is preferable to control the hydrophilic resin composition liquid in which the detected amount of the abnormal part exceeds the threshold value so as not to be supplied to applied layer forming step (S3).

The supply of the hydrophilic resin composition liquid can be controlled, for example, by switching a valve 36 provided in the pipe. For example, by switching the valve 36 in accordance with the timing at which the hydrophilic resin composition liquid in pipe 35 imaged by imaging device 41 passes through the valve 36, the hydrophilic resin composition liquid in which the detected amount of the abnormal part is less than or equal to the threshold value may be supplied to applied layer forming step (S3), and control may be performed so that the hydrophilic resin composition liquid in which the detected amount of the abnormal part exceeds the threshold value is not supplied to applied layer forming step (S3). The imaging step and the bubble detection step are performed while the hydrophilic resin composition liquid is continuously fed, whereby the feeding of the hydrophilic resin composition liquid is also preferably controlled by using the valve 36 and the like provided in the pipe in the supply control step. The threshold value of the detection amount of the abnormal part may be optionally selected so that hydrophilic resin composition layer 15 does not cause abnormalities such as bubble marks and pores.

The hydrophilic resin composition liquid supplied to applied layer forming step (S3) in the supply control step is stored in, for example, application liquid tank 37 provided on the upstream side in the liquid feeding direction of slot die 38 shown in Fig. 3. The hydrophilic resin composition liquid can be continuously supplied from application liquid tank 37 to slot die 38. The hydrophilic resin composition liquid that has not been supplied to applied layer forming step (S3) may be recovered, for example, in a recovery tank (not shown), and supplied to stirring tank 32 shown in Fig. 3. The hydrophilic resin composition liquid may be directly supplied to stirring tank 32 without passing through the recovery tank. The hydrophilic resin composition liquid supplied to stirring tank 32 can be used to form hydrophilic resin composition layer 15 through defoaming step (S2) again.

### (Other steps)

The manufacturing method for an acidic gas separation membrane sheet may include steps other than the above-described steps. Examples of the other steps include a liquid layer inspecting step of inspecting a liquid layer formed by applying the hydrophilic resin composition liquid applied onto first porous layer 11 in applied layer forming step (S3), and an additional drying step performed to further remove a medium in the applied layer formed in applied layer forming step (S3), provided following lamination step (S4).

The liquid layer inspection step is a step of detecting abnormalities such as bubbles, bubble marks, and foreign matters present on the surface of the liquid layer of the first porous layer and/or in the liquid layer prior to the removal of the solvent contained in the liquid layer on first porous layer 11. In the liquid layer inspection step, the liquid layer on first porous layer 11 is imaged using a liquid layer imaging device 42 such as a camera, and the obtained image is analyzed by the above-described binarization processing method or the like, to allow the abnormalities present on the surface of the liquid layer and/or in the liquid layer to be detected. When a portion where abnormalities exceeding the threshold value are detected in the liquid layer inspection step is subjected to marking, and a gas separation membrane element is manufactured using acidic gas separation membrane sheet 10, a portion where a large amount of abnormalities is detected (marking portion) can be removed, and a portion where a small amount of abnormalities is detected can be efficiently extracted.

In the additional drying step, for example, as shown in Fig. 5, laminated body 18 can be continuously unrolled from laminated-body rolled body 18a, and transported to an additional drying furnace 49 to further remove the medium from the applied layer. As the additional drying oven furnace 49, the same one as the drying furnace 39 can be used, and the drying temperature when additional drying is performed may be appropriately determined depending on the medium contained in the hydrophilic resin composition liquid, and the types of first porous layer 11 and second porous layer 12. Usually, the temperature is preferably higher than the freezing point of the medium and lower than the melting point of a material forming first porous layer 11 and second porous layer 12. In general, the temperature is suitably within a range of 60 °C to 200 °C. Laminated body 18 conveyed out of the additional drying furnace 49 can be rerolled in a roll.

The case where the winding step of winding laminated body 18 in a roll is provided following lamination step (S4) has been described above as an example, but laminated body 18 may be transported to the additional drying furnace without performing the step of winding laminated body 18 to perform additional drying.

### (Manufacturing apparatus for acidic gas separation membrane sheet)

As described above, the manufacturing method for acidic gas separation membrane sheet 10 can be performed by, for example, a manufacturing apparatus for acidic gas separation membrane sheet 10 shown in Fig. 3. A manufacturing apparatus for acidic gas separation membrane sheet 10 including a first porous layer 11, a hydrophilic resin composition layer 15, and a second porous layer 12 in this order, the apparatus including:
a bubble removing unit that removes bubbles contained in a hydrophilic resin composition liquid for forming hydrophilic resin composition layer 15;
a first porous layer unrolling unit that unrolls first porous layer 11 from a roll-shaped first porous layer rolled body 11a;
an application unit that applies the hydrophilic resin composition liquid onto first porous layer 11 to form an applied layer on first porous layer 11;
a second porous layer unrolling unit that unrolls the second porous layer from a roll-shaped second porous layer rolled body 12a;
a lamination unit that laminates second porous layer 12 on the applied layer to form a laminated body; and
a laminated body winding unit that winds the laminated body into a roll,
wherein the hydrophilic resin composition liquid contains a hydrophilic resin and a medium, and
the bubble removing unit includes a shear application unit that applies a shear to the hydrophilic resin composition liquid, and a leaving unit that leaves the hydrophilic resin composition liquid.

The manufacturing apparatus for acidic gas separation membrane sheet 10 further includes: an bubble confirming unit that confirms the bubbles mixed in the hydrophilic resin composition liquid supplied to the application unit; and a control unit that controls supply of the hydrophilic resin composition liquid to the application unit based on a confirmation result by the bubble confirming unit.

The bubble removing unit is an apparatus that performs defoaming step (S2), and includes a shear application unit that performs a shear application step (S2a), and a leaving unit that performs leaving step (S2b). The shear application unit includes a filter. Examples of the shear application unit include a stirring tank 32 and a filter 33 shown in Fig. 3, for example. The shear application unit may include a pump or the like that feeds the hydrophilic resin composition liquid to filter 33. Stirring tank 32 may include a pressure reducing device such as a pressure reducing pump or a vacuum pump that reduces the pressure of the inside of stirring tank 32. Stirring tank 32 and filter 33 may include a temperature control device that performs the above-described temperature control step. Examples of the temperature control device include a heating medium circulation jacket and a heat insulating material. The leaving unit is not particularly limited as long as the leaving unit can leave the hydrophilic resin composition liquid, and may be, for example, a defoaming tank 34 shown in Fig. 3 or a stirring tank 32 used in a state where a shear is not applied to stirring tank 32. The leaving unit may include a pressure reducing device such as a pressure reducing pump or a vacuum pump that reduces the pressure of the inside of stirring tank 32 or defoaming tank 34. The leaving unit may include a heating medium such as a heating medium circulation jacket, a resistance heating device, an induction heating device, or a microwave irradiation device that heats the inside of stirring tank 32 and the inside of defoaming tank 34.

The first porous layer unrolling unit is a device that performs the step of unrolling the first porous layer from a roll-shaped first porous layer rolled body. The first porous layer unrolling unit may include a support that rotatably supports first porous layer rolled body 11a, a driving source that rotates and drive first porous layer rolled body 11a to unroll first porous layer 11, and a transport roll such as a nip roll, a suction roll or the like to feed out first porous layer 11 from first porous layer rolled body 11a.

The application unit is a device that performs an applied layer forming step (S3). The application unit can include, for example, an application device such as an application liquid tank 37 or a slot die 38, and a drying furnace 39 shown in Fig. 3.

The second porous layer unrolling unit is a device that performs the step of unrolling a second porous layer from a roll-shaped second porous layer rolled body. The second porous layer unrolling unit may include a support that rotatably supports second porous layer rolled body 12a, a driving source that rotates and drive second porous layer rolled body 12a to unroll second porous layer 12, and a transport roll such as a nip roll, a suction roll or the like to feed out second porous layer 12 from second porous layer rolled body 12a.

As shown in Fig. 3, for example, the lamination unit can include a nip roll that laminates first porous layer 11 on which an applied layer is formed and second porous layer 12. The laminated body winding unit is a device that performs the step of winding a laminated body into a roll. The laminated body winding unit may include a support that rotatably supports laminated-body rolled body 18a on which the laminated body is wound, and a driving source and the like to rotate and drive laminated-body rolled body 18a for winding the laminated body.

The bubble confirming unit and the control unit are devices that performs an inspection step. The bubble confirming unit can include a device that performs an imaging step and a bubble detection step. For example, the bubble confirming unit can include an imaging device 41 shown in Fig. 3, a light source 44 and a reflection plate 45 shown in Fig. 4, and a binarization processing unit for binarizing the imaged image to detect bubbles. The control unit can include a device that performs a supply control step, and can include, for example, a valve 36 shown in Fig. 3, and a driving source and the like to drive the valve 36.

The manufacturing apparatus for acidic gas separation membrane sheet 10 may further include a liquid layer inspection unit that performs a liquid layer inspection step, and an additional drying unit that performs an additional drying step.

### (Gas separation membrane element)

Acidic gas separation membrane sheet 10 can be used for known gas separation membrane elements such as spiral-wound type, flat-membrane type, pleated type, and plate-and-frame type.

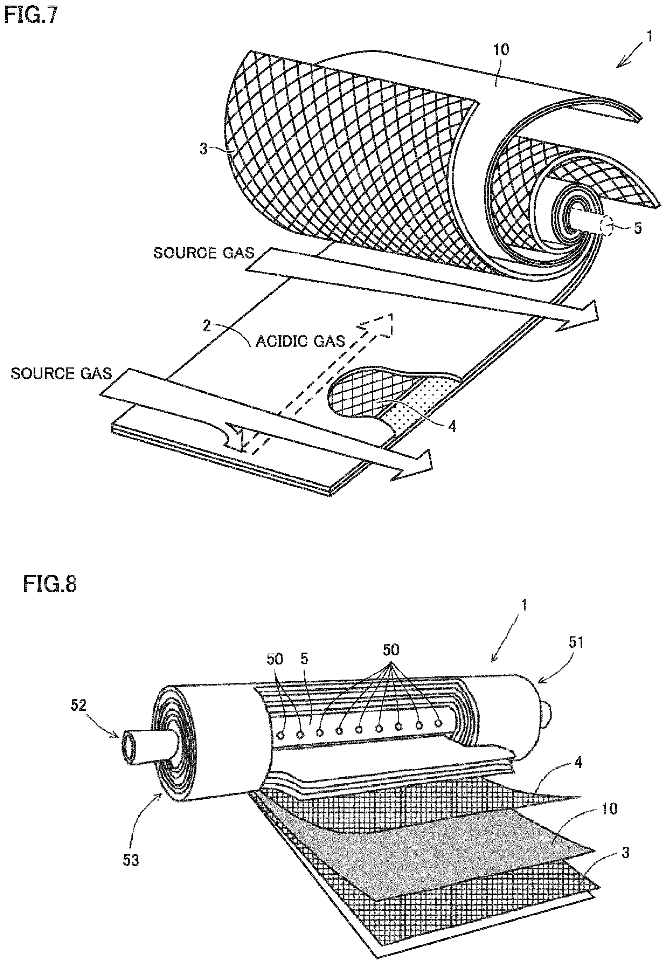

The case of using the spiral-wound type gas separation membrane element as the gas separation membrane element will be described as an example. Fig. 7 is a schematic perspective view showing a developed spiral-wound type gas separation membrane element, in which a partially cutout portion is provided. Fig. 8 is a schematic perspective view showing gas separation membrane element 1, in which a partially developed portion is provided.

Spiral-wound type gas separation membrane element 1 may include a feed-side flow path member 3 in which a source gas containing an acidic gas flows, an acidic gas separation membrane sheet 10 that selectively separates the acidic gas contained in the source gas flowing in feed-side flow path member 3 to cause the acidic gas to permeate therethrough, a permeate-side flow path member 4 in which the permeate gas containing the acidic gas that has permeated through acidic gas separation membrane sheet 10 flows, a sealing part for preventing the mixing of the source gas with the permeate gas, and a central tube 5 for collecting the permeate gas flowing in permeate-side flow path member 4. The spiral-wound type gas separation membrane element may include a wound body which includes central tube 5 and an element stack body rolled around central tube 5. In the element stack body, at least one feed-side flow path member 3, at least one acidic gas separation membrane sheet 10, and at least one permeate-side flow path member 4 are stacked. The wound body may have any shape such as a cylindrical shape or a rectangular cylindrical shape.

Gas separation membrane element 1 may further include a fixing member (not shown) such as an outer peripheral tape or an anti-telescope device in order to prevent the wound body from being rewound or collapsed in its winding. In order to secure strength against a load due to internal pressure and external pressure on gas separation membrane element 1, an outer wrap (reinforcing layer) may be provided on the outermost periphery of the wound body.

Feed-side flow path member 3 and permeate-side flow path member 4 preferably have a function of promoting the turbulent flows (surface renewal of the membrane surface) of the source gas and permeate gas that has permeated through acidic gas separation membrane sheet 10 to increase the membrane permeation rate of the permeate gas in the source gas, and a function of reducing the pressure losses of the source gas to be fed and permeate gas that has permeated through acidic gas separation membrane sheet 10 as much as possible. Feed-side flow path member 3 and permeate-side flow path member 4 preferably have a function as a spacer for forming a flow path for the source gas and the permeate gas, and a function of generating turbulent flow in the source gas and the permeate gas, whereby those having a network shape (net shape, mesh shape, and the like) are suitably used. Depending on the network shape, the flow path for the gas changes. Therefore, the shape of the unit cell of the network is preferably selected according to the purpose, for example, from shapes such as a square, a rectangle, a rhombus, and a parallelogram. Materials of feed-side flow path member 3 and permeate-side flow path member 4 are not particularly limited. The materials preferably have heat resistance capable of enduring the operating temperature conditions of gas separation device in which gas separation membrane element 1 is provided.

A sealing part is provided to prevent the mixing of the source gas with the permeate gas. For example, a sealing material penetrates into permeate-side flow path member 4 and acidic gas separation membrane sheet 10, and is cured, whereby the sealing part can be formed. The sealing part can be generally provided at end parts located at both ends in a direction parallel to the axis of central tube 5 of the wound body, and at the end part in which a distance between central tube 5 and the end part is long among end parts located at both ends in a direction orthogonal to the axis of central tube 5 so as to have a so-called envelope shape. A material generally used as an adhesive agent can be used for the sealing part. For example, an epoxy resin and the like can be used.

Central tube 5 is a conduit for collecting the permeate gas that has permeated through acidic gas separation membrane sheet 10 and discharging the same from gas separation membrane element 1. Central tube 5 is preferably made of a material that has heat resistance capable of enduring the operating temperature conditions of gas separation device in which gas separation membrane element 1 is provided and a mechanical strength capable of enduring the rolling of the element stack body. As shown in Fig. 8, central tube 5 has a plurality of holes 50 in the outer peripheral surface of central tube 5. Holes 50 communicate between the flow path space for the permeate gas formed by permeate-side flow path member 4 and an inner hollow space of central tube 5.

Gas separation membrane element 1 can be used for a gas separation membrane module, and the gas separation membrane module includes one or more gas separation membrane elements 1. The gas separation membrane module includes a source gas supply port (portion communicating with a supply-side end part 51 shown in Fig. 8) for supplying the source gas to the acidic gas separation membrane sheet, a permeate gas discharge port (portion communicating with a discharge port 52 shown in Fig. 8) for discharging the permeate gas that has permeated through the acidic gas separation membrane sheet, and a retentate gas discharge port (a portion communicating with a discharge-side end part 53 shown in Fig. 8) for discharging the source gas that has not permeated through the acidic gas separation membrane sheet. The source gas feeding port, the retentate gas discharge port, and the permeate gas discharge port may be provided in the main body of the gas separation membrane element, or provided in a container for storing the gas separation membrane element (hereinafter, referred to as "housing").

The housing can form a space for sealing the source gas flowing in the separation membrane module. The housing may include, for example, a cylindrical member made of stainless steel and the like, and a blocking member for blocking both the axial ends of the cylindrical member. The housing may have any shape such as a cylindrical shape or a rectangular cylindrical shape. The housing preferably has a cylindrical shape since gas separation membrane element 1 usually has a cylindrical shape. A partition can be provided in the housing to prevent the mixing of the source gas fed to feed-side end part 51 with the retentate gas that has not permeate through acidic gas separation membrane sheet 10 provided in gas separation membrane element 1.

When greater than or equal to two gas separation membrane elements 1 are disposed in the housing, the source gases fed to respective gas separation membrane elements 1 may be fed in parallel or in series. Here, supplying source gases in parallel means that at least the source gases are distributed and introduced into a plurality of gas separation membrane elements. Supplying source gases in series means that at least a permeate gas and/or a retentate gas discharged from upstream gas separation membrane element 1 are/is introduced into downstream gas separation membrane element 1.

### EXAMPLES

Hereinafter, the present invention will be more specifically described with reference to Examples and Comparative Examples; however, the present invention is not intended to be limited thereto.

### [Measurement of viscosity]

The viscosity of a hydrophilic resin composition liquid used in each of Examples and Comparative Examples at a temperature of 25 °C and a shear rate of 0.1 s⁻¹ was measured by a rheometer (manufactured by TA Instruments Co., Ltd.; trade name: "AR 2000 ex").

### [Measurement of contact angle]

The contact angle of water in a second porous layer used in each of Examples and Comparative Examples was measured at 25 °C using a contact angle meter (manufactured by Kyowa Interface Science Co., Ltd.; trade name: "DropMaster 500").

### [Evaluation of wrinkles]

The acidic gas separation membrane sheet obtained in each of Examples and Comparative Examples was unrolled, and the number of wrinkles per 50 m² was visually counted. A case where the number of wrinkles was 0 was determined as very good; a case where the number of wrinkles was 1 to 2 was determined as good; and a case where the number of wrinkles was greater than or equal to 3 was determined as poor.

### [Example 1]

### (Preparation step)

161.38 parts by mass of water as a medium, 4 parts by mass of crosslinked polyacrylic acid (manufactured by SUMITOMO SEIKA CHEMICALS CO., LTD.; trade name: AQUPEC "HV-501") as a hydrophilic resin, and 0.8 parts by mass of non-crosslinked polyacrylic acid (manufactured by SUMITOMO SEIKA CHEMICALS CO., LTD.: trade name: AQUPAANA "AP-40F (40 % Na Saponified)" were charged into a raw material tank 31 to obtain a dispersion liquid in which the hydrophilic resin was dispersed in the water. After 38.09 parts by mass of a 50 % aqueous solution of cesium hydroxide was added to the dispersion liquid, followed by mixing, 1.2 parts by mass of a 10 % surfactant (manufactured by AGC Seimi Chemical Co., Ltd.; trade name: Surflon "S-242") aqueous solution was added as an additive, followed by mixing to obtain a hydrophilic resin composition liquid. When the viscosity of the obtained hydrophilic resin composition liquid was measured by the above procedure, the viscosity was 160 Pa s.

### (Defoaming step-1)

As shown in Fig. 3, the hydrophilic resin composition liquid obtained in the preparation step was transferred from a raw material tank 31 to a stirring tank 32 including a rotor blade type stirrer, and the hydrophilic resin composition liquid was heated to a temperature of 30 ± 3 °C in stirring tank 32 (temperature control step). Thereafter, in stirring tank 32, the temperature was maintained at 30 ± 1 °C, and stirring was performed for 4 hours (stirring step). The details and stirring conditions of stirring tank 32 are as follows.
·Volume of stirring tank: 1 m³
·Diameter of stirring tank: 1.0 m
·Diameter of stirring blade: 0.8 m
·Shape of stirring blade: anchor blade
·Rotation number of stirring: 20 rpm
·Shear rate: 8 s⁻¹

Subsequently, after the stirring was stopped, the pressure in stirring tank 32 was reduced to 4.6 kPaA (A indicates an absolute pressure), and the temperature was maintained at 30 ± 1 °C, and the hydrophilic resin composition liquid was left for 18 hours (leaving step-1).

### (Defoaming step -2)

After leaving step-1, the pressure in stirring tank 32 was restored to the atmospheric pressure while the temperature was maintained at 30 ± 1 °C. As shown in Fig. 3, the hydrophilic resin composition liquid was delivered from stirring tank 32 to cause the hydrophilic resin composition liquid to pass through filter 33 (filtration step), and introduced into a defoaming tank 34. The details and filtration conditions the filter are as follows.
·Filter: PP depth filter (opening: 50 µm) (manufactured by Roki Techno Co., Ltd.; trade name: Slope Pure Filter Cartridge "SHP-500")
·Flow rate: 0.12 m³/h
·Filtration area: 0.18 m²
·Shear rate: 30 s⁻¹

Subsequently, the pressure of defoaming tank 34 into which the hydrophilic resin composition liquid was introduced was reduced to 4.6 kPaA (A indicates an absolute pressure). The temperature was maintained at 30 ± 1 °C, and the hydrophilic resin composition liquid was left for 20 hours (leaving step-2).

### (Inspection step)

Thereafter, in a pipe 35 connecting the defoaming tank 34 and an application liquid tank 37 to each other, an imaging device (manufactured by IDS Imaging Development Systems; trade name: uEye CP "UI-3240CP-M-GL"), a light source (manufactured by AITEC SYSTEM Co., Ltd.; trade name: Power-Eye "LSP68x240W-ST"), and a reflective plate were disposed as shown in Figs. 4(a) and 4(b). The hydrophilic resin composition liquid fed in the pipe was imaged (imaging step). The obtained image was binarized and analyzed to detect bubbles in the hydrophilic resin composition liquid fed in the pipe (bubble detection step). By switching a valve provided in the pipe, the hydrophilic resin composition liquid in which no bubbles were detected was fed to application liquid tank 37 provided on the upstream side in the liquid feeding direction of a slot die 38. The hydrophilic resin composition liquid in which the bubbles were detected was recovered in a recovery tank (supply control step).

### (Applied layer forming step)

As a first porous layer 11, a hydrophobic porous PTFE membrane (manufactured by Sumitomo Electric Fine Polymer, Inc.; trade name: POREFLON "HP-010-50") was used, and the hydrophilic resin composition liquid obtained above was applied onto one surface of first porous layer 11 unrolled from a first porous layer rolled body 11a at a temperature of 20 to 25 °C to form a liquid layer. Following the step, first porous layer 11 onto which the hydrophilic resin composition liquid was applied was transported to drying furnace 39, and dried at a temperature of about 120 °C for about 20 minutes to form an applied layer.

### (lamination step)

Subsequently, in a room in which an environmental humidity was adjusted to a range of 60 %RH to 65 %RH, the same hydrophobic PTFE porous membrane as that used for first porous layer 11 was used as a second porous layer 12. Second porous layer 12 unrolled from a second porous layer rolled body 12a was laminated on the applied layer on first porous layer 11 to form a laminated body 18. Laminated body 18 was wound in a roll. When the contact angle of water in second porous layer 12 was measured using the above-described method, the contact angle was 125 degrees at a temperature of 25 °C.

### (Additional drying step)

As shown in Fig. 5, laminated body 18 wound in a roll was unrolled, conveyed to additional drying furnace 49, dried at a temperature of about 120 °C for about 20 minutes, and wound in a roll to obtain an acidic gas separation membrane sheet. The obtained acidic gas separation membrane sheet was evaluated for wrinkles. The results are shown in Table 1.

### [Example 2] (not according to the invention)

An acidic gas separation membrane sheet was obtained in the same manner as in Example 1 except that a defoaming step-2 and an inspection step were not performed. The results of the evaluation of wrinkles of the obtained acidic gas separation membrane sheet are as shown in Table 1.

### [Comparative Example 1]

An acidic gas separation membrane sheet was obtained in the same manner as in Example 1 except that a defoaming step-1, a defoaming step-2, and an inspection step were not performed. The obtained acidic gas separation membrane sheet was evaluated for wrinkles. The results are shown in Table 1.

### [Comparative Example 2]

An acidic gas separation membrane sheet was obtained in the same manner as in Example 1 except that only a leaving step-2 of a defoaming step-2 was performed without a defoaming step-1 and an inspection step being performed in a defoaming step. The obtained acidic gas separation membrane sheet was evaluated for wrinkles. The results are shown in Table 1.

**[Table 1]**

| | Hydrophilic resin composition liquid | second porous layer | | Stirring step | Leaving step-1 | Filtration step | Leaving step-2 | Inspection step | Evaluation of wrinkles |
|---|---|---|---|---|---|---|---|---|---|
| | Viscosity | Material | Contact angle | | | | | | |
| | [Pa•s] | - | [°] | - | - | - | - | - | - |
| Example 1 | 160 | PTFE | 125 | Presence | Presence | Presence | Presence | Presence | Very good |
| Example 2 | 160 | PTFE | 125 | Presence | Presence | None | None | None | Good |
| Comparative Example 1 | 160 | PTFE | 125 | None | None | None | None | None | Poor |
| Comparative Example 2 | 160 | PTFE | 125 | None | None | None | Presence | None | Poor |

REFERENCE SIGNS LIST

1: gas separation membrane element, 3: feed-side flow path member, 4: permeate-side flow path member, 5: central tube, 10: acidic gas separation membrane sheet, 11: first porous layer, 11a: first porous layer rolled body, 12: second porous layer, 12a: second porous layer rolled body, 15: hydrophilic resin composition layer, 18: laminated body, 18a: laminated-body rolled body, 31: raw material tank, 32: stirring tank, 33: filter, 34: defoaming tank, 35: pipe, 36: valve, 37: application liquid tank, 38: slot die, 39: drying furnace, 41: imaging device, 42: liquid layer imaging device, 44: light source, 45: reflection plate, 49: additional drying furnace, 50: hole, 51: feed-side end part, 52: discharge port, 53: discharge-side end part, 90: acidic gas separation membrane sheet, 91: first porous layer, 92: second porous layer, 95: hydrophilic resin composition layer

## Claims

1. A manufacturing method for an acidic gas separation membrane sheet including a first porous layer, a hydrophilic resin composition layer, and a second porous layer in this order, the method comprising:
a step of preparing a hydrophilic resin composition liquid for forming the hydrophilic resin composition layer;
a step of removing bubbles contained in the hydrophilic resin composition liquid;
a step of applying the hydrophilic resin composition liquid onto the first porous layer and forming an applied layer on the first porous layer; and
a step of laminating the second porous layer on the applied layer and forming a laminated body,
wherein the hydrophilic resin composition liquid contains a hydrophilic resin and a medium,
the step of removing bubbles includes:
a step of applying a shear to the hydrophilic resin composition liquid; and
a step of leaving the hydrophilic resin composition liquid, wherein
the step of applying the shear to the hydrophilic resin composition liquid includes a step of filtering the hydrophilic resin composition liquid, and wherein
the step of leaving the hydrophilic resin composition liquid is performed under at least one of a reduced pressure atmosphere and a heated atmosphere, wherein
a pressure under the reduced pressure atmosphere is greater than or equal to 1.01 times of the vapor pressure of the medium, and
a temperature of the heated atmosphere is higher than or equal to 25 °C and is lower than 90 °C.

2. The method according to claim 1, further comprising:
a step of unrolling the first porous layer from a roll-shaped first porous layer rolled body to supply the first porous layer to the step of forming the applied layer;
a step of unrolling the second porous layer from a roll-shaped second porous layer rolled body to supply the second porous layer to the step of forming the laminated body; and
a step of winding the laminated body into a roll.

3. The method according to claim 1 or 2, wherein the hydrophilic resin composition liquid has a viscosity of greater than or equal to 100 Pa·s at a temperature of 25 °C and a shear rate of 0.1 s⁻¹.

4. The method according to any one of claims 1 to 3, wherein the hydrophilic resin composition liquid further contains a substance that reversibly reacts with an acidic gas.

5. The method according to any one of claims 1 to 4, wherein the step of removing bubbles is performed by performing the step of applying the shear and the step of leaving once or repeating the steps twice or more.

6. The method according to any one of claims 1 to 5, wherein, in the step of removing bubbles, the step of leaving is lastly performed.

7. The method according to any one of claims 1 to 6, wherein the step of applying the shear further includes a step of stirring the hydrophilic resin composition liquid.

8. The method according to any one of claims 1 to 7, further comprising a step of adjusting the hydrophilic resin composition liquid to a predetermined temperature before the step of removing bubbles.

9. The method according to claim 8, wherein the predetermined temperature is lower than 90 °C.

10. The method according to any one of claims 1 to 9, further comprising a step of confirming the bubbles mixed in the hydrophilic resin composition liquid between the step of removing bubbles and the step of forming the applied layer.

11. The method according to claim 10, further comprising a step of delivering the hydrophilic resin composition liquid after the step of removing bubbles,
wherein the step of confirming the bubbles includes a step of imaging the hydrophilic resin composition liquid that has been delivered in the step of delivering, and a step of detecting the bubbles mixed in the hydrophilic resin composition liquid using an image obtained in the step of imaging.

12. The method according to claim 11, further comprising the step of controlling supply of the hydrophilic resin composition liquid to the step of forming the applied layer performed by the step of delivering based on a detection result in the step of detecting the bubbles,
wherein the step of controlling performs control so as to supply the hydrophilic resin composition liquid in which a detectable amount of the bubbles is less than or equal to a threshold value, to the step of forming the applied layer.

13. The method according to any one of claims 1 to 12, wherein a contact angle of water in the second porous layer is greater than or equal to 90 degrees at a temperature of 25 °C.

14. The method according to any one of claims 1 to 13, wherein the second porous layer contains at least one resin selected from the group consisting of polyethylene, polypropylene, polystyrene, polyethylene terephthalate, fluorine-containing resin, polyethersulfone, polyphenylene sulfide, polysulfone, polyimide, polyetherimide, and polyetheretherketone.

15. A manufacturing apparatus for an acidic gas separation membrane sheet including a first porous layer, a hydrophilic resin composition layer, and a second porous layer in this order, the apparatus comprising:
a bubble removing unit that removes bubbles contained in a hydrophilic resin composition liquid for forming the hydrophilic resin composition layer;
a first porous layer unrolling unit that unrolls the first porous layer from a roll-shaped first porous layer rolled body;
an application unit that applies the hydrophilic resin composition liquid onto the first porous layer to form an applied layer on the first porous layer;
a second porous layer unrolling unit that unrolls the second porous layer from a roll-shaped second porous layer rolled body;
a lamination unit that laminates the second porous layer on the applied layer to form a laminated body; and
a laminated body winding unit that winds the laminated body into a roll,
wherein the hydrophilic resin composition liquid contains a hydrophilic resin and a medium,
the bubble removing unit includes a shear application unit that applies a shear to the hydrophilic resin composition liquid, and a leaving unit that leaves the hydrophilic resin composition liquid, and
the shear application unit includes a filter for causing the hydrophilic resin composition liquid to pass through.

16. The apparatus according to claim 15, further comprising:
a bubble confirming unit that confirms the bubbles mixed in the hydrophilic resin composition liquid supplied to the application unit; and
a control unit that controls supply of the hydrophilic resin composition liquid to the application unit based on a confirmation result by the bubble confirming unit.

## Patentansprüche

1. Verfahren zum Herstellen einer sauren Gastrennmembranfolie, die eine erste poröse Schicht, eine hydrophile Harzzusammensetzungsschicht und eine zweite poröse Schicht in dieser Reihenfolge aufweist, wobei das Verfahren umfasst:
einen Schritt des Herstellens einer hydrophilen Harzzusammensetzungsflüssigkeit zum Bilden der hydrophilen Harzzusammensetzungsschicht;
einen Schritt des Entfernens von in der hydrophilen Harzzusammensetzungsflüssigkeit enthalten Blasen;
einen Schritt des Aufbringens der hydrophilen Harzzusammensetzungsflüssigkeit auf die erste poröse Schicht und des Bildens einer aufgebrachten Schicht auf der ersten porösen Schicht; und
einen Schritt des Laminierens der zweiten porösen Schicht auf die aufgebrachte Schicht und Bilden eines laminierten Körpers,
wobei die hydrophile Harzzusammensetzungsflüssigkeit ein hydrophiles Harz und ein Medium enthält,
der Schritt des Entfernens von Blasen umfasst:
einen Schritt des Anwendens einer Scherung auf die hydrophile Harzzusammensetzungsflüssigkeit; und
einen Schritt des Belassens der hydrophilen Harzzusammensetzungsflüssigkeit, wobei
der Schritt des Anwendens der Scherung auf die hydrophile Harzzusammensetzungsflüssigkeit einen Schritt des Filterns der hydrophilen Harzzusammensetzungsflüssigkeit aufweist, und wobei
der Schritt des Belassens der hydrophilen Harzzusammensetzungsflüssigkeit unter einer druckreduzierten Atmosphäre und/oder einer erwärmten Atmosphäre durchgeführt wird, wobei
ein Druck unter der druckreduzierten Atmosphäre größer als oder gleich dem 1,01-fachen des Dampfdrucks des Mediums ist, und
eine Temperatur der erwärmten Atmosphäre höher als oder gleich 25 °C und niedriger als 90 °C ist.

2. Verfahren gemäß Anspruch 1, ferner umfassend:
einen Schritt des Abrollens der ersten porösen Schicht von einem rollenförmigen Rollkörper mit der ersten poröse Schicht, um die erste poröse Schicht dem Schritt des Bildens der aufgebrachten Schicht zuzuführen;
einen Schritt des Abrollens der zweiten porösen Schicht von einem rollenförmigen Rollkörper mit der zweiten porösen Schicht, um die zweite poröse Schicht dem Schritt des Bildens des laminierten Körpers zuzuführen; und
einen Schritt des Aufwickelns des laminierten Körpers zu einer Rolle.

3. Verfahren gemäß Anspruch 1 oder 2, wobei die hydrophile Harzzusammensetzungsflüssigkeit eine Viskosität von größer oder gleich 100 Pa s bei einer Temperatur von 25 °C und einer Scherrate von 0,1 s⁻¹ aufweist.

4. Verfahren gemäß einem der Ansprüche 1 bis 3, wobei die hydrophile Harzzusammensetzungsflüssigkeit ferner eine Substanz enthält, die reversibel mit einem sauren Gas reagiert.

5. Verfahren gemäß einem der Ansprüche 1 bis 4, wobei der Schritt des Entfernens von Blasen durchgeführt wird, indem der Schritt des Anwendens der Scherung und der Schritt des Belassens einmal durchgeführt werden oder die Schritte zweimal oder öfter wiederholt werden.

6. Verfahren gemäß einem der Ansprüche 1 bis 5, wobei in dem Schritt des Entfernens von Blasen zuletzt der Schritt des Belassens durchgeführt wird.

7. Verfahren gemäß einem der Ansprüche 1 bis 6, wobei der Schritt des Anwendens der Scherung ferner einen Schritt des Rührens der hydrophilen Harzzusammensetzungsflüssigkeit aufweist.

8. Verfahren gemäß einem der Ansprüche 1 bis 7, welches ferner einen Schritt des Einstellens der hydrophilen Harzzusammensetzungsflüssigkeit auf eine vorbestimmte Temperatur vor dem Schritt des Entfernens von Blasen umfasst.

9. Verfahren gemäß Anspruch 8, wobei die vorbestimmte Temperatur niedriger als 90 °C ist.

10. Verfahren gemäß einem der Ansprüche 1 bis 9, ferner umfassend einen Schritt des Bestätigens der in der hydrophilen Harzzusammensetzungsflüssigkeit gemischten Blasen zwischen dem Schritt des Entfernens von Blasen und dem Schritt des Bildens der aufgetragenen Schicht.

11. Verfahren gemäß Anspruch 10, ferner umfassend einen Schritt des Abgebens der hydrophilen Harzzusammensetzungsflüssigkeit nach dem Schritt des Entfernens von Blasen,
wobei der Schritt der Bestätigung von Blasen einen Schritt des Abbildens der hydrophilen Harzzusammensetzungsflüssigkeit, die in dem Schritt des Abgebens abgegeben wurde, und einen Schritt des Erfassens der in die hydrophile Harzzusammensetzungsflüssigkeit gemischten Blasen unter Verwendung eines in dem Schritt des Abbildens erhaltenen Bildes aufweist.

12. Verfahren gemäß Anspruch 11, ferner umfassend den Schritt des Steuerns der Zufuhr der hydrophilen Harzzusammensetzungsflüssigkeit zu dem Schritt des Bildens der aufgebrachten Schicht, der durch den Schritt des Abgebens durchgeführt wird, auf Grundlage eines Erfassungsergebnisses in dem Schritt des Erfassens von Blasen,
wobei der Schritt des Steuerns eine Steuerung durchführt, um die hydrophile Harzzusammensetzungsflüssigkeit, in der eine erfassbare Menge von Blasen kleiner als oder gleich einem Schwellenwert ist, dem Schritt des Bildens der aufgebrachten Schicht zuzuführen.

13. Verfahren gemäß einem der Ansprüche 1 bis 12, wobei der Kontaktwinkel von Wasser in der zweiten porösen Schicht größer oder gleich 90 Grad bei einer Temperatur von 25 °C ist.

14. Verfahren gemäß einem der Ansprüche 1 bis 13, wobei die zweite poröse Schicht mindestens ein Harz enthält, das ausgewählt ist aus der Gruppe bestehend aus Polyethylen, Polypropylen, Polystyrol, Polyethylenterephthalat, fluorhaltigem Harz, Polyethersulfon, Polyphenylensulfid, Polysulfon, Polyimid, Polyetherimid und Polyetheretherketon.

15. Vorrichtung zum Herstellen einer sauren Gastrennmembranfolie, die eine erste poröse Schicht, eine hydrophile Harzzusammensetzungsschicht und eine zweite poröse Schicht in dieser Reihenfolge aufweist, wobei die Vorrichtung umfasst:
eine Blasenentfernungseinheit, die in einer hydrophilen Harzzusammensetzungsflüssigkeit enthaltene Blasen zur Bildung der hydrophilen Harzzusammensetzungsschicht entfernt;
eine Abrolleinheit für die erste poröse Schicht, die die erste poröse Schicht von einem rollenförmigen Rollkörper mit der ersten porösen Schicht abrollt;
eine Auftragseinheit, die die hydrophile Harzzusammensetzungsflüssigkeit auf die erste poröse Schicht aufbringt, um eine aufgebrachte Schicht auf der ersten porösen Schicht zu bilden;
eine Abrolleinheit für die zweite poröse Schicht, die die zweite poröse Schicht von einem rollenförmigen Rollkörper mit der zweiten porösen Schicht abrollt;
eine Laminiereinheit, die die zweite poröse Schicht auf die aufgebrachte Schicht laminiert, um einen laminierten Körper zu bilden; und
eine Aufwickeleinheit für den laminierten Körper, die den laminierten Körper zu einer Rolle aufwickelt,
wobei die hydrophile Harzzusammensetzungsflüssigkeit ein hydrophiles Harz und ein Medium enthält,
die Blasenentfernungseinheit eine Scheranwendungseinheit aufweist, die eine Scherung auf die hydrophile Harzzusammensetzungsflüssigkeit anwendet, und eine Belasseinheit, die die hydrophile Harzzusammensetzungsflüssigkeit belässt, und
die Scheranwendungseinheit einen Filter aufweist, der die hydrophile Harzzusammensetzungsflüssigkeit durchlässt.

16. Vorrichtung gemäß Anspruch 15, ferner umfassend:
eine Blasenbestätigungseinheit, die die in der Auftragseinheit zugeführten hydrophilen Harzzusammensetzungsflüssigkeit gemischten Blasen bestätigt; und
eine Steuereinheit, die die Zufuhr der hydrophilen Harzzusammensetzungsflüssigkeit zu der Auftragseinheit auf Grundlage eines Bestätigungsergebnisses durch die Blasenbestätigungseinheit steuert.

## Revendications

1. Procédé de fabrication d'une feuille de membrane de séparation de gaz acides incluant une première couche poreuse, une couche de composition de résine hydrophile, et une seconde couche poreuse, dans cet ordre, le procédé comprenant :
une étape consistant à préparer un liquide de composition de résine hydrophile pour former la couche de composition de résine hydrophile ;
une étape consistant à éliminer des bulles contenues dans le liquide de composition de résine hydrophile ;
une étape consistant à appliquer le liquide de composition de résine hydrophile sur la première couche poreuse et former une couche appliquée sur la première couche poreuse ; et
une étape consistant à stratifier la seconde couche poreuse sur la couche appliquée et former un corps stratifié,
dans lequel le liquide de composition de résine hydrophile contient une résine hydrophile et un milieu,
l'étape consistant à éliminer des bulles inclut :
une étape consistant à appliquer un cisaillement au liquide de composition de résine hydrophile ; et
une étape consistant à laisser le liquide de composition de résine hydrophile, dans lequel
l'étape consistant à appliquer le cisaillement au liquide de composition de résine hydrophile inclut une étape consistant à filtrer le liquide de composition de résine hydrophile, et dans lequel
l'étape consistant à laisser le liquide de composition de résine hydrophile est réalisée sous au moins une parmi une atmosphère à pression réduite et une atmosphère chauffée, dans lequel
une pression sous l'atmosphère à pression réduite est supérieure ou égale à 1,01 fois la pression de vapeur du milieu, et
une température de l'atmosphère chauffée est supérieure ou égale à 25 °C et inférieure à 90 °C.

2. Procédé selon la revendication 1, comprenant en outre :
une étape consistant à dérouler la première couche poreuse à partir d'un corps enroulé de première couche poreuse en forme de rouleau pour apporter la première couche poreuse à l'étape consistant à former la couche appliquée ;
une étape consistant à dérouler la seconde couche poreuse à partir d'un corps enroulé de seconde couche poreuse en forme de rouleau pour apporter la seconde couche poreuse à l'étape consistant à former le corps stratifié ; et
une étape consistant à embobiner le corps stratifié en un rouleau.

3. Procédé selon la revendication 1 ou 2, dans lequel le liquide de composition de résine hydrophile présente une viscosité supérieure ou égale à 100 Pa·s à une température de 25 °C et un taux de cisaillement de 0,1 s⁻¹.

4. Procédé selon l'une quelconque des revendications 1 à 3, dans lequel le liquide de composition de résine hydrophile contient en outre une substance qui réagit de manière réversible avec un gaz acide.

5. Procédé selon l'une quelconque des revendications 1 à 4, dans lequel l'étape consistant à éliminer des bulles est réalisée en réalisant l'étape consistant à appliquer le cisaillement et l'étape consistant à laisser une fois ou en répétant les étapes deux fois ou plus.

6. Procédé selon l'une quelconque des revendications 1 à 5, dans lequel, dans l'étape consistant à éliminer des bulles, l'étape consistant à laisser est réalisée en dernier.

7. Procédé selon l'une quelconque des revendications 1 à 6, dans lequel l'étape consistant à appliquer le cisaillement inclut en outre une étape consistant à agiter le liquide de composition de résine hydrophile.

8. Procédé selon l'une quelconque des revendications 1 à 7, comprenant en outre une étape consistant à ajuster le liquide de composition de résine hydrophile à une température prédéterminée avant l'étape consistant à éliminer des bulles.

9. Procédé selon la revendication 8, dans lequel la température prédéterminée est inférieure à 90 °C.

10. Procédé selon l'une quelconque des revendications 1 à 9, comprenant en outre une étape consistant à confirmer les bulles mélangées dans le liquide de composition de résine hydrophile entre l'étape consistant à éliminer des bulles et l'étape consistant à former la couche appliquée.

11. Procédé selon la revendication 10, comprenant en outre une étape consistant à distribuer le liquide de composition de résine hydrophile après l'étape consistant à éliminer des bulles,
dans lequel l'étape consistant à confirmer les bulles inclut une étape consistant à imager le liquide de composition de résine hydrophile qui a été distribué lors de l'étape consistant à distribuer, et une étape consistant à détecter les bulles mélangées dans le liquide de composition de résine hydrophile en utilisant une image obtenue lors l'étape consistant à imager.

12. Procédé selon la revendication 11, comprenant en outre l'étape consistant à commander l'apport du liquide de composition de résine hydrophile à l'étape consistant à former la couche appliquée, réalisée par l'étape de distribution sur la base d'un résultat de détection lors de l'étape consistant à détecter les bulles,
dans lequel l'étape consistant à commander réalise une commande de manière à apporter le liquide de composition de résine hydrophile, dans lequel une quantité détectable des bulles est inférieure ou égale à une valeur seuil, à l'étape consistant à former la couche appliquée.

13. Procédé selon l'une quelconque des revendications 1 à 12, dans lequel un angle de contact d'eau dans la seconde couche poreuse est supérieur ou égal à 90 degrés à une température de 25 °C.

14. Procédé selon l'une quelconque des revendications 1 à 13, dans lequel la seconde couche poreuse contient au moins une résine sélectionnée dans le groupe consistant en : polyéthylène, polypropylène, polystyrène, polyéthylène téréphtalate, résine contenant du fluor, polyéthersulfone, sulfure de polyphénylène, polysulfone, polyimide, polyétherimide et polyétheréthercétone.

15. Appareil de fabrication pour une feuille de membrane de séparation de gaz acides incluant une première couche poreuse, une couche de composition de résine hydrophile, et une seconde couche poreuse, dans cet ordre, l'appareil comprenant :
une unité d'élimination de bulles qui élimine des bulles contenues dans un liquide de composition de résine hydrophile pour former la couche de composition de résine hydrophile ;
une unité de déroulement de première couche poreuse qui déroule la première couche poreuse à partir d'un corps enroulé de première couche poreuse en forme de rouleau ;
une unité d'application qui applique le liquide de composition de résine hydrophile sur la première couche poreuse pour former une couche appliquée sur la première couche poreuse ;
une unité de déroulement de seconde couche poreuse qui déroule la seconde couche poreuse à partir d'un corps enroulé de seconde couche poreuse en forme de rouleau ;
une unité de stratification qui stratifie la seconde couche poreuse sur la couche appliquée pour former un corps stratifié ; et
une unité d'embobinage de corps stratifié qui embobine le corps stratifié en un rouleau,
dans lequel le liquide de composition de résine hydrophile contient une résine hydrophile et un milieu,
l'unité d'élimination des bulles inclut une unité d'application de cisaillement qui applique un cisaillement au liquide de composition de résine hydrophile, et une unité pour laisser qui laisse le liquide de composition de résine hydrophile, et
l'unité d'application de cisaillement inclut un filtre pour amener le liquide de composition de résine hydrophile à passer à travers.

16. Appareil selon la revendication 15, comprenant en outre :
une unité de confirmation de bulles qui confirme les bulles mélangées dans le liquide de composition de résine hydrophile apporté à l'unité d'application ; et
une unité de commande qui commande l'apport du liquide de composition de résine hydrophile à l'unité d'application sur la base d'un résultat de confirmation par l'unité de confirmation de bulles.
